Europäisches Patentamt

European Patent Office

Office européen des brevets

(11) Publication number: **0 353 001**
A2

# EUROPEAN PATENT APPLICATION

(21) Application number: **89307500.2**

(22) Date of filing: **24.07.89**

(51) Int. Cl.⁵: **A 01 K 13/00**
**A 45 D 19/02, A 45 D 24/22**

(30) Priority: **23.07.88 GB 8817616**

(43) Date of publication of application:
**31.01.90 Bulletin 90/05**

(84) Designated Contracting States:
**AT BE CH DE ES FR GR IT LI LU NL SE**

(71) Applicant: **Oaten, Malcolm**
**75 Station Road Hepthorne Lane**
**North Wingfield Chesterfield Derbyshire S42 5HZ  (GB)**

(72) Inventor: **Oaten, Malcolm**
**75 Station Road Hepthorne Lane**
**North Wingfield Chesterfield Derbyshire S42 5HZ  (GB)**

(74) Representative: **Cooper, Derek Robert et al**
**E.N. Lewis & Taylor 144 New Walk**
**Leicester LE1 7JA  (GB)**

(54) Chemical applicator.

(57) Several embodiments of chemical applicator are described, primarily for applying a liquid chemical such as flea killer to an animal. The applicator in a typical form comprises a plurality of teeth 11 having fibre tips 14 fed with liquid chemical from sponge cores 12 within the body of the applicator. A cover 15 is provided for the fibre tips to prevent drying. In alternative embodiments, the chemical is supplied from a pressurised container which may be valve controlled so as selectively to connect some or all of the teeth to the supply or alternatively may be provided from a pierceable capsule. The capsule or pressurised container may be replaceable.

FIG.3.

**Description**

## Chemical applicator

This invention relates to a chemical applicator, principally for applying chemicals such as pesticides to animals. It may also be used for applying chemicals to human hair, for example medicaments, hair colouring, restoring or conditioning chemicals.

Conventionally, pesticides are applied to animals by means of either an aerosol spray or a dry powder. In the case of the aerosol method, it is necessary to hold back the animal's fur to ensure that the pesticide is directed to the area where pests or parasites such as fleas reside. In the case of dry powder, this is sprinkled over the animal's fur and then combed in. Both methods are wasteful of the pesticide since a considerable amount is deposited on the animal s fur, which the animal may then try to lick off with a consequential risk of sickness. Also, the pesticide can cause irritation to the eyes, nose, etc. not only of the animal but also of the person applying the pesticide. Furthermore, the whole operation is usually highly distressing to the animal concerned.

It is an object of the present invention to obviate or mitigate these problems.

According to the present invention, there is provided a chemical applicator in the form of a comb having a plurality of generally parallel tooth members, the tooth members having at end portions thereof applicator means from which a chemical is dispensed in use. In this way, the chemical can be applied without wastage directly to the area where it is needed.

The chemical may be in liquid form, the term "liquid" being intended to cover flowable creams, emulsions and gels.

In one arrangement, the applicator means comprises absorbent elements on or extending from the end portions of the tooth members and which contain the chemical in liquid form.

In an alternative arrangement, the tooth members are hollow and the applicator means comprises orifices in the end portions which communicate with the interiors of the tooth members, a chemical in liquid form being dispensed through the orifices. Advantageously, these orifices open onto the sides of the end portions a short distance from the end proper of the tooth members.

Desirably, the applicator also comprises a reservoir of liquid chemical associated with the comb, which reservoir is preferably refillable. Conveniently, the comb includes a body from which the tooth members extend, and the reservoir is provided in the body. Advantageously, the body comprises a portion from which the tooth members extend and a handle extending from said portion, and the reservoir is provided at least partly in the handle. In one embodiment, the reservoir contains absorbent material which holds the liquid chemical.

In other embodiments, the reservoir comprises a replaceable container of liquid chemical and means are provided to control the flow of the chemical from the container to the applicator means.

The container may be pressurised, the control means comprises a valve on the container, and a manually operable member is provided on the applicator to operate the valve.

Preferably, valve means is provided to control the flow of the chemical selectively to selected ones or groups of the tooth members. More particularly, in a first arrangement conduit means are provided in the body of the comb, each conduit means providing communication between the reservoir and the applicator means on respective ones or groups of the tooth members, and the valve means is operative selectively to close said conduit means. In this case, each conduit means desirably communicates with the applicator means on the tooth members in a respective section of the overall length of the comb. Conveniently, two such conduit means are provided one communicating with the applicator means on one or more tooth members at one end of the comb, the other communicating with the remaining applicator means. The valve means is preferably in the form of a manually operable plug-type valve.

In an alternative arrangement, sensor means is provided to open the valve means in response to one or more of the tooth members contacting an object. Preferably, the valve means comprises a plurality of valves respectively associated with selective ones or selected groups of tooth members, and the sensor means comprises a sensor for each such selected tooth member or group of tooth members, each sensor being arranged to operate the respective valve. Conveniently, each valve member controls the supply of chemical to three adjacent tooth members, and the respective sensor is provided on the middle tooth member of the three. Advantageously, the sensor means comprises stems which pass through the interiors of respective ones of the tooth members.

In a still further embodiment, the reservoir comprises a replaceable flexible capsule of liquid chemical. Piercing means may be provided within the body to release chemical from the capsule.

Pressure applying means may be provided for compressing the capsule progressively to expel chemical from the capsule. The pressure applying means may comprise a plunger in the body of the applicator or an air pump. The latter may include a flexible walled hollow air chamber and a non-return air valve through which air in the chamber can be pumped into the body by compressing the chamber manually to displace liquid from the capsule.

The invention will now be further described, by way of example only, with reference to the accompanying drawings, in which:

Figure 1 is a side view of a first embodiment of a chemical applicator according to the present invention;

Figure 2 is an exploded perspective view of the applicator shown in Figure 1;

Figure 3 is a sectional side view of a second embodiment of a chemical applicator according to the present invention;

Figures 4 and 5 are, respectively, a side view and a sectional side view of a third embodiment of a chemical applicator according to the present invention;

Figure 6 is a side view of a modified version of the applicator shown in Figures 4 and 5;

Figure 7 is a side view of a fourth embodiment of a chemical applicator according to the present invention;

Figure 8 is a sectional side view of the applicator shown in Figure 7;

Figure 9 is a section taken on the line X-X in Figure 8;

Figure 10 and Figure 11 are, respectively, a side view and a sectional side view of a fifth embodiment of a chemical applicator according to the present invention;

Figures 12, 13 and 14 are, respectively, a front sectional view, plan view and sectional side view of a sixth embodiment of chemical applicator;

Figure 15 is a front elevational view of a capsule for use in the embodiment shown in Figures 12 to 14; and

Figure 16 is an enlarged sectional view of a pressure applying air pump which may be used in connection with the sixth embodiment.

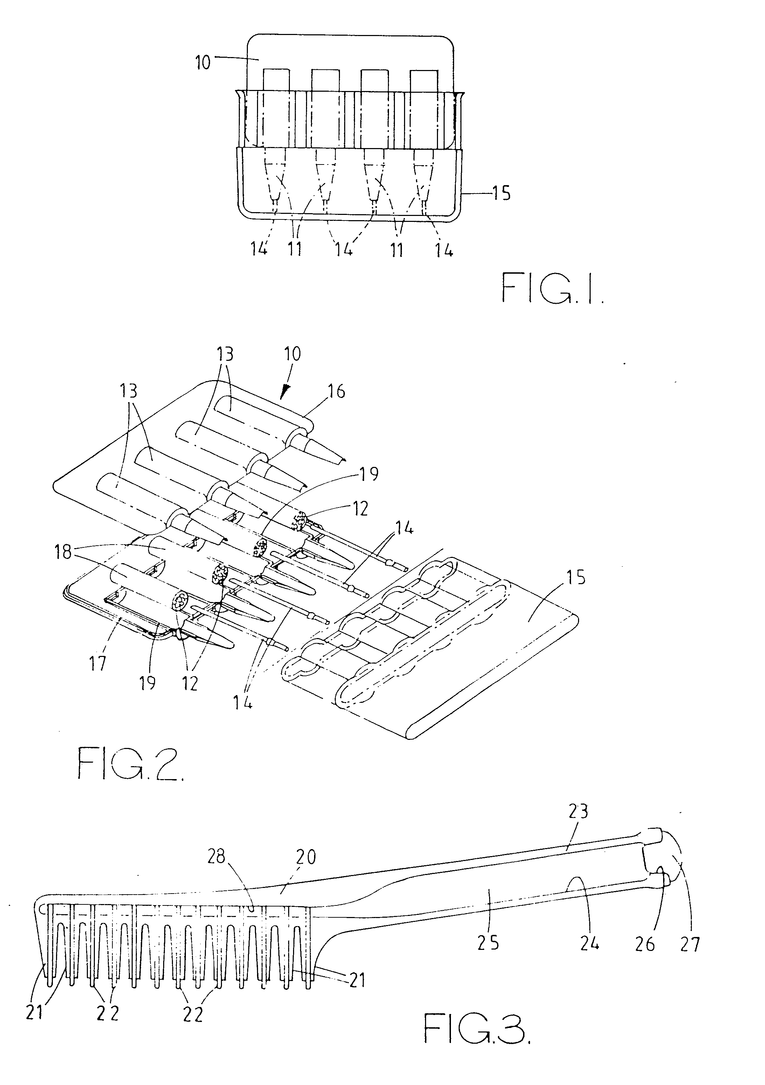

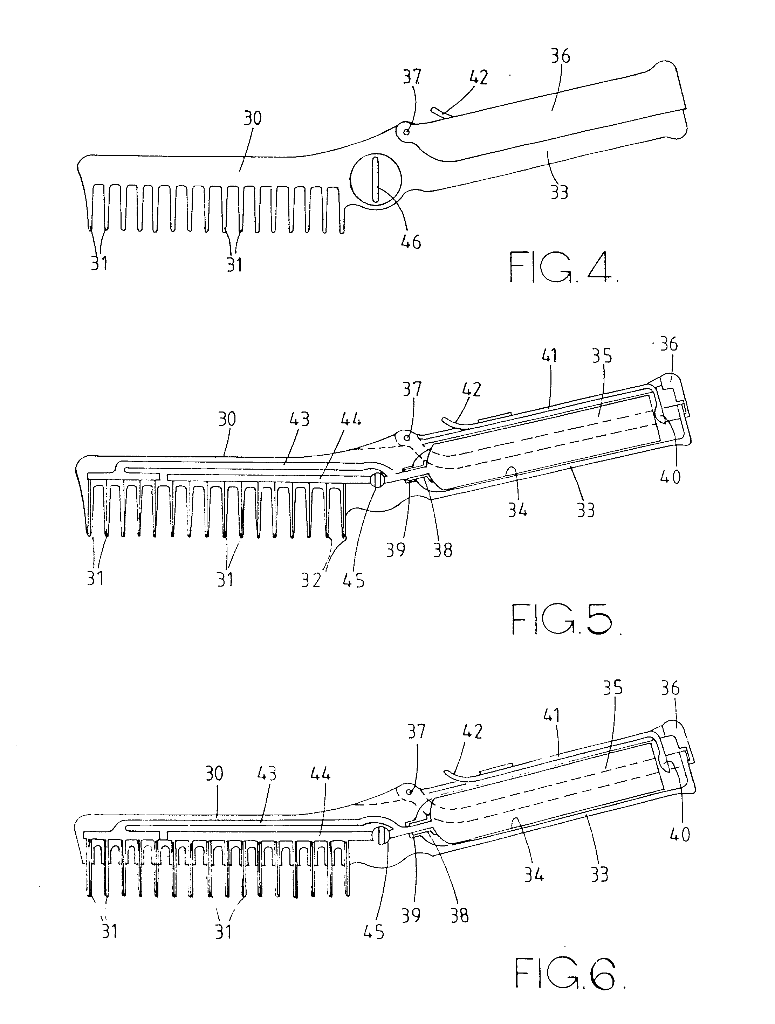

Referring first to Figures 1 and 2, the chemical applicator shown therein is in the general form of a comb having a body 10 from which a number of tooth members 11 extend in generally parallel relation. Each tooth member 11 is hollow and accommodates a cylindrical sponge 12 in a main barrel portion 13 thereof, which sponge 12 is impregnated with a liquid chemical. Extending through the centre of the sponge 12 and projecting from an end portion of the tooth member 11 is a fibre rod 14. In operation, capillary action causes the liquid chemical held in the sponges 12 to migrate to the tips of the fibre rods 14, where the chemical can be applied e.g. to an animal for the control of pests and parasites. A cover 15 is provided for placing over the comb when the applicator is not in use to prevent the fibre rods 14 from drying out. The cover 15 is configurated so that when the applicator is in operation, the cover can be engaged from behind with the body 10 to increase the manually graspable area of the comb and thereby facilitate its use. Preferably, the cover 15 is made from transparent material, as shown in the drawings.

As can be seen in Figure 2, the comb is itself formed from two identical mouldings 16 and 17 which are secured together in any convenient manner. The sponges 12 are each rolled up in a plastics sheet 18 to prevent the escape of the liquid chemical from the side thereof. Additional sealing walls 19 are provided on the mouldings 16 and 17 to seal around the sponges 12 and prevent leakages of the liquid chemical through the join line between the mouldings.

The applicator shown in Figures 1 and 2 is designed for disposal as soon as the reservoir of liquid chemical contained in the sponges 12 has been exhausted. Figure 3 shows an alternative embodiment which can be refilled with liquid chemical when necessary. More particularly, the applicator shown in Figure 3 is again in the form of a comb having a body portion 20 from which a plurality of tooth members 21 extend in generally parallel relation. The tooth members 21 are hollow, and each contains a fibre rod 22 which projects from an end portion of the tooth member 21. Each fibre rod is preferably encased in a metal tube and is in situ moulded within the comb. A handle 23 extends from the body portion 20 and has formed therein a chamber 24 in which an absorbent material (such as a sponge 25) is accommodated, access to the chamber 24 being gained through an opening 26 at the end of the handle 23 which is normally closed by a preferably screw-threaded stopper 27. The chamber 24 communicates with a passage 28 in the body portion 20 into which ends of the fibre rods 22 project, the passage 28 also being filled with an absorbent material.

In use, liquid chemical flows by capillary action along the fibre rods 22 to the tips thereof from the reservoir of chemical contained in the passage 28 and in the chamber 24. When the chemical has become depleted, the sponge 25 can be recharged by pouring fresh chemical into the chamber 24 through the opening 26 after removal of the stopper 27.

Although not shown, the comb is provided with a cover to prevent the fibre rods from drying out when the applicator is not in use.

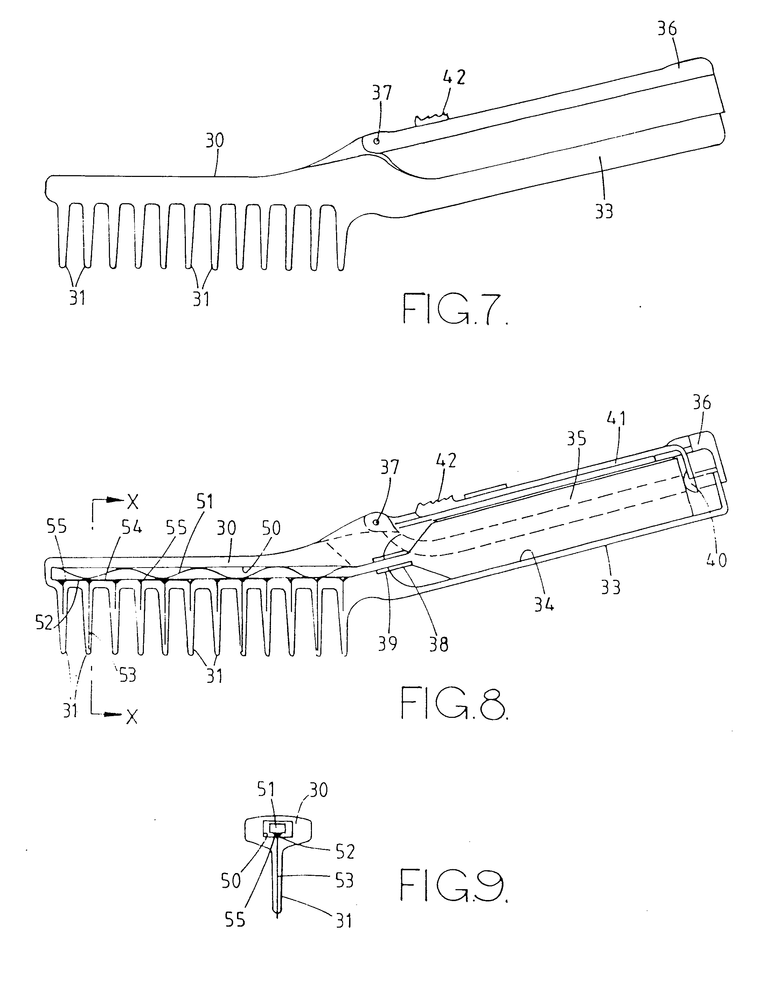

Figures 4 & 5 show a further embodiment of the invention which is suitable for use on rather larger animals and which comprises a comb having a body portion 30 from which a plurality of hollow teeth 31 extend in generally parallel relation. Each tooth member 31 has an orifice 32 which communicates with its interior and which opens onto a side of the tooth member a short distance from the end proper of the latter. A handle 33 extends from the body portion 30 and incorporates a chamber 34 in which is received a pressurised container 35 of liquid chemical. Access to the chamber 34 is gained by way of a cover 36 which is pivoted to the handle 33 at a point 37.

A valve 38 on one end of the container 35 controls the flow of liquid chemical from the latter, and engages an abutment 39 at one end of the chamber 34. The opposite end of the container 35 is engaged by a flange portion 40 of a member 41 which is slidably mounted on the cover 36. When a knob portion 42 of the member 41 is pushed to the left as viewed in Figures 4 and 5, the flange portion 40 urges the container 35 towards the abutment 39 and thereby depresses the valve 38, so opening the latter in a conventional manner and allowing liquid chemical to flow from the container 35.

The body portion 30 of the comb includes a pair of passages 43 and 44. The passage 43 is in permanent communication with the valve 38 on the container 35 and also communicates with the interiors of a few (five in the illustrated device) of the tooth members 31 at an end of the comb remote from the handle 33. The passage 44 on the other hand communicates with the valve 38 by way of plug valve 45 and also communicates with the interiors of the remainder of the tooth members 31.

In order to use the applicator, the knob 42 is depressed to cause liquid chemical to flow out of the container 35 in the manner described above, and into the passage 43 (and also into the passage 44 if the plug valve 45 is open). The liquid chemical then passes through the hollow interiors of the tooth members 31 and issues through the orifices 32, where it can be applied direct to e.g. an animal's skin. By positioning the orifices on one side of the tooth members rather than at the ends thereof, it is ensured that the flow of chemical is not obstructed by contact of the tips of the tooth members with the animal's skin and that chemical is not forced under pressure into the actual skin of the animal.

In the event that it is desired to treat only a small area of the animal, or an area which is not generally flat, or an area around sensitive organs (e.g. on the animal's head), the plug valve 45 can be closed by turning a knob 46 on the body portion 30 to close off the passage 44, so that chemical is supplied only to a short length of the comb, i.e. the tooth members 31 at the end thereof remote from the handle 33.

Figure 6 shows a modified version of the comb wherein the teeth 31 are formed by metal tubes in situ moulded into the comb.

Figures 7, 8 and 9 illustrate a further version of the chemical applicator which is generally similar to that shown in Figures 4 and 5, except that only one passage 50 is provided in the body portion 30, which passage communicates with the interiors of all the tooth members 31. The plug valve 45 and its associated knob 46 are also omitted, so that the passage 50 is in permanent communication with the valve 38 on the container 35.

In the passage 50 there is disposed an undulating spring element 51 whose undulations coincide with every third one of the tooth members 31. Associated with each of those tooth members is a valve assembly 52 including a sensor stem 53 which extends through said third tooth member and which projects from its end. On the upper end of the stem 53 is a cross-piece 54 which mounts three valve members 55, these members being associated respectively with said third tooth member and the two tooth members on either side thereof. The valve assembly 52 is biased by the spring element 51 to close off communication between the passage 50 and the interiors of the three respective tooth members, but is lifted against this bias to open such communication as soon as the tip of the sensor stem 53 contacts e.g. an animal's skin. Thus, once the knob 42 is operated the applicator automatically delivers liquid chemical to only those tooth members which are in contact with the animal's skin.

If desired, a clip can be provided to hold the knob 42 in an operative position once pressed so that the valve 38 is held open and the comb becomes touch-sensitive, i.e. so that chemical issues automatically from the tooth members when the respective sensor rods 53 are operated.

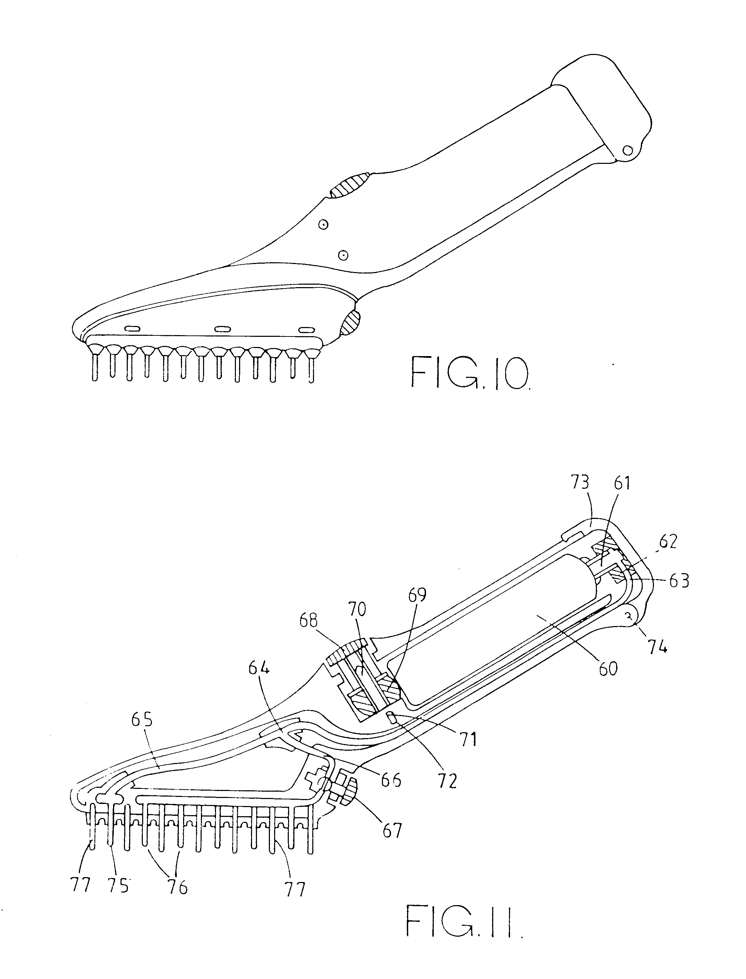

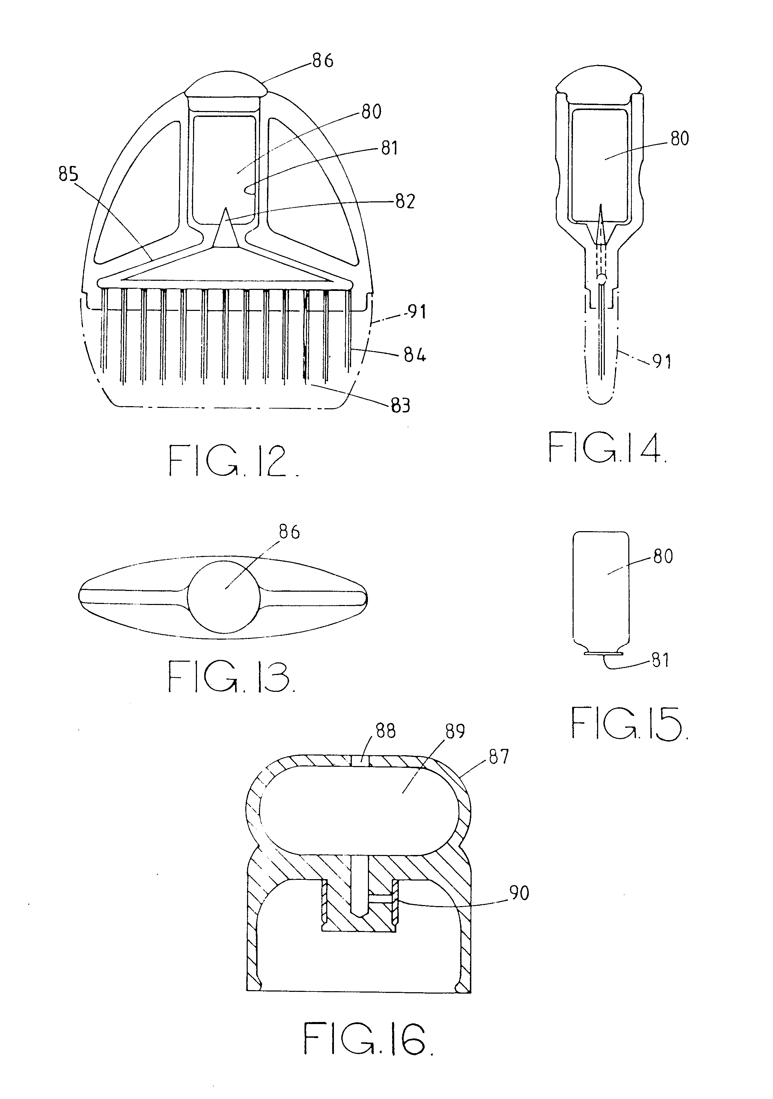

Figures 10 and 11 of the drawings show a further embodiment of chemical applicator using a pressurised container of liquid chemical. The container 60 is mounted with its outlet 61 in the upper-most end of the applicator in use. This ensures that the outlet valve 61 does not become blocked by the treatment chemical. The outlet valve 61 is surrounded by a flexible block 62 having a feed pipe 63 which is in the form of plastics tubing passing through the body of the applicator and having a branch formed at 64. One portion of the tubing 65 passes to the teeth at the free end of the applicator whereas the other branch 66 is used to feed the remainder of the teeth. The tube 66 has a manually operated control valve 67 which may be used to cut off the supply to the teeth except for those at the tip fed by the tube 65.

In order to operate the pressurised container 60, a sensitive control valve 68 is provided. A compressible block 69 is mounted about a T-shaped stem 70, the T-bar 71 being located in elongate slots 72 in the body of the applicator. The T-bar 70 is threaded and rotation of a knurled knob 68 causes compression or allows extension of the compressible block 69.

The block 69 exerts an axial thrust on the pressurised container 60, forcing it against the end of the applicator body. Since the linear movement of the container 60 is controlled by rotation of the knurled knob of the valve 68, very precise control can be obtained of the amount of chemical being released from the container.

In order to change the container 60 when it is exhausted, the end 73 of the applicator is pivoted at 74 to enable it to be opened and the container replaced. The block 62 is a push fit on the standard container valve so that it can readily be removed and replaced.

In the embodiment of Figures 10 and 11, only alternate teeth are fed with the chemical. It will be seem that only one tooth 75 is connected to the tube 65 at the tip and every alternate tooth 76 of the remaining set of teeth is connected to the valve controlled tube 66.

The remaining teeth 77 throughout the length of the comb are solid comb teeth, the function of which is simply to part the animal hair or fur for even distribution of the chemical.

In some instances the use of a pressurised container of chemcial may be undesirable or unnecessary. The embodiment shown in Figures 12 to 16 of the drawings uses a non-pressurised container illustrated in Figure 15, in the form of a capsule 80, sealed by a metal foil 81. The capsule 80 is disposed within a suitable housing 81 formed in the body of the applicator. A rigid spike 82 is provided in the housing 81 in such a position that, as the capsule 80 is inserted, the spike 82 pierces the foil 81, releasing the liquid chemical. This type of arrangement using a non-pressurised capsule of chemical may be particularly suitable for chemicals in the form of creams or gels of relatively high viscosity if the applicator is provided with hollow teeth and for liquid chemicals of low viscosity if the applicator, as shown, is provided with fibre tips 83 housed within metal tubular teeth 84 moulded into the applicator. An integral internal passage-way 85 carries the liquid from the capsule 80 to the teeth 83. An end cap 86 is provided to seal the applicator. It may also be used to exert initial pressure on the capsule 80 to pierce it on the spike 82.

An optional air pump is shown at 87 in Figure 16. This may be used to exert extra pressure on the capsule 80 so that, during the course of its life, the capsule expels as much as possible of the chemical. In use, the air pump 87 is substituted for the closure cap 86. The user s thumb is used to seal an external opening 88, communicating with an air space 89 and to compress the flexible body of the air pump so as to expel air from the space 89 through a rubber valve 90 into the interior housing 81 of the applicator. This causes pressure to be exerted on the capsule 80, forcing liquid into the teeth. It may be used to increase the normal capillary flow of the liquid as the capsule becomes depleted.

As in previously described embodiments, a transparent cap 91 is provided for the teeth to reduce loss by evaporation from the fibre tips.

In each of the above-described embodiments, the applicator enables the chemical to be applied directly where it is needed efficiently and without waste. Moreover, the application of the chemical takes the form of a normal grooming action, and therefore the animal does not become unduly distressed, if at all. Furthermore, little or no chemical remains on the animal's fur to cause irritation or sickness if licked off.

In the above description, reference has been made to using the chemical applicator for the purpose of applying pesticides to animals. The applicator does however have many other uses apart from this, and can for example be used to apply medicaments or hair colourants, conditioners or hair restorer to the human scalp.

## Claims

1. A chemical applicator in the form of a comb having a plurality of general parallel tooth members, the tooth members having, at end portions thereof, applicator means from which a chemical is dispensed in use.

2. An applicator according to claim 1 wherein the applicator means comprises absorbent elements on or extending from the end portions of the tooth members and which contain the chemical in liquid form.

3. An applicator according to claim 1 wherein the tooth members are hollow and the applicator means comprise orifices in the end portions which communicate with the interiors of the tooth members, a chemical in liquid form being dispensed through the orifices.

4. An applicator according to claim 3 wherein the orifices open onto the sides of the end portions a short distance from the end proper of the tooth members.

5. An applicator according to any preceding claim and including a reservoir of liquid chemical associated with the comb.

6. An applicator according to claim 5 wherein the reservoir is refillable.

7. An applicator according to claim 5 or claim 6 wherein the comb includes a body from which the tooth members extend and a handle extending from said portion, the reservoir being provided at least partly in the handle.

8. An applicator according to any one of claims 5 to 7 wherein the reservoir contains absorbent material which holds the liquid chemical.

9. An applicator according to any one of claims 5 to 7 wherein the reservoir comprises a replaceable container of liquid chemical and means are provided to control the flow of the chemical from the container to the applicator means.

10. An applicator according to claim 9 wherein the container is pressurised and the control means comprises a valve on the container and a manually operable member is provided on the applicator to operate the valve.

11. An applicator according to claim 9 or claim 10 wherein valve means is provided to control the flow of the chemical selectively to selected ones or groups of the tooth members.

12. An applicator according to claim 11 wherein conduit means are provided in the body of the comb, each conduit means providing communication between the reservoir and the applicator means on respective ones or groups of the tooth members, and the valve means is operative selectively to close said conduit means.

13. An applicator according to claim 12 wherein each conduit means communicates with the applicator means on the tooth members in a respective section of the overall length of the comb.

14. An applicator according to claim 13 wherein two such conduit means are provided, one communicating with the applicator means on one or more tooth members at one end of the comb and the other communicating with the remaining applicator means.

15. An applicator according to any one of claims 11 to 14 wherein the valve means is in the form of a manually operable plug-type valve.

16. An applicator according to claim 11 wherein sensor means are provided to open the valve means in response to one or more of the tooth members contacting an object.

17. An applicator according to claim 16 wherein the valve means comprises a plurality of valves respectively associated with selected ones or selected groups of tooth members, and the sensor means comprises a sensor for each such selected tooth member or group, each sensor being arranged to operate the respective valve.

18. An applicator according to claim 17 wherein each valve member controls the supply of chemical to three adjacent tooth members, and the respective sensor is provided on the middle tooth member of the three.

19. An applicator according to any one of claims 16 to 18 wherein the sensor means comprises a stem passing through the interior of a tooth member.

20. An applicator according to claim 9 wherein the reservoir comprises a replaceable flexible capsule of liquid chemical.

21. An applicator according to claim 19 wherein piercing means are provided within the body to release chemical from the capsule.

22. An applicator according to claim 20 or claim 21 wherein pressure applying means are provided for compressing the capsule progressively to expel chemical from the capsule.

23. An applicator according to claim 22 wherein the pressure applying means comprise a plunger.

24. An applicator according to claim 22 wherein the pressure applying means comprise an air pump including a flexible walled hollow air chamber and a non-return air valve through which air in the chamber can be pumped into the body by compressing the chamber manually, to displace liquid from the capsule.

25. An applicator as claimed in claim 7 wherein the handle is provided with a transparent portion such that the contents of the reservoir can be viewed.

FIG.1.

FIG.2.

FIG.3.

FIG.4.

FIG.5.

FIG.6.

FIG.7.

FIG.8.

FIG.9.

FIG.10.

FIG.II.

FIG.12.

FIG.14.

FIG.13.

FIG.15.

FIG.16.